Europäisches Patentamt

(19) European Patent Office

Office européen des brevets

(11) Veröffentlichungsnummer: **0 127 647**
**B1**

(12) **EUROPÄISCHE PATENTSCHRIFT**

(45) Veröffentlichungstag der Patentschrift:
02.09.87

(51) Int. Cl.⁴: **G 03 B 23/18,** G 03 B 23/10

(21) Anmeldenummer: 83903788.4

(22) Anmeldetag: **29.11.83**

(86) Internationale Anmeldenummer:
**PCT/EP 83/00318**

(87) Internationale Veröffentlichungsnummer:
**WO 84/02200 (07.06.84 Gazette 84/14)**

(54) **PROJEKTIONSGERÄT.**

(30) Priorität: 01.12.82 DE 3244394

(43) Veröffentlichungstag der Anmeldung:
12.12.84 Patentblatt 84/50

(45) Bekanntmachung des Hinweises auf die Patenterteilung:
02.09.87 Patentblatt 87/36

(84) Benannte Vertragsstaaten:
**AT BE CH DE FR GB LI NL SE**

(56) Entgegenhaltungen:
EP-A-0 032 438
DE-A-761 744
CH-A-486 716
FR-A-1 423 058
FR-A-2 365 140
US-A-3 036 496

(73) Patentinhaber: **Sacher, Friedrich Josef,
Agnesstrasse 52a, D-5210 Troisdorf (DE)**

(72) Erfinder: **Sacher, Friedrich Josef, Agnesstrasse
52a, D-5210 Troisdorf (DE)**

(74) Vertreter: **Freischem, Werner, Dipl.- Ing.,
Patentanwälte Dipl.- Ing. W. Freischem Dipl.-
Ing. I. Freischem An Gross St. Martin 2, D-5000
Köln 1 (DE)**

## Beschreibung

Die Erfindung geht aus von einem Projektionsgerät für Diapositive (Dias) mit mehreren Objektiven, denen je ein Kondensor und eine Projektionslampe sowie ein zwischen Kondensor und Objektiv einschiebbares Dia zugeordnet sind, wobei die Projektionslampen unabhängig voneinander steuerbar sind, mehrere Objektive im geringen Abstand voneinander auf einem Objektivträger angeordnet sind, die den Objektiven zugeordneten Kondensoren in gleicher Anordnung in einem Kondensorträger befestigt sind und die den Objektiven zugeordneten Dias in gleicher Anordnung auf einem ebenen Diaträger befestigt sind.

Projektoren dieser Art sind aus der FR-A-1 423 058 bekannt. Bei dem bekannten Gerät werden die Dias in Form eines Filmstreifens mit fünf Bildern zwischen entsprechend angeordneten Kondensoren und Objektiven gebracht, deren optische Achsen auf einen Punkt gerichtet sind. Bei dem bekannten Gerät ist die Anordnung der Dias und der Projektorteile mechanisch und optisch ungünstig, weil einerseits die Abstände zwischen dem untersten und obersten Dia relativ groß und die Abstände zwischen benachbarten Dias extrem klein sind. Dies führt einerseits zu einer erheblichen Schwierigkeit, auf dem Bildschirm fünf deckungsgleiche Bilder zu erzeugen, die auch in den Randbereichen genau übereinstimmen. Andererseits sind Speziallinsen für die Kondensoren und für die Objektive erforderlich. Die Anordnung der Diapositive in Reihe hat den weiteren Nachteil, daß es schwierig ist, eine größere Zahl von Diapositiven zu einem Bildprogramm zusammenzustellen und nach einem vorgegebenen Programm auf einem Bildschirm vorzuführen. Es sind auch Projektionsgeräte bekannt, bei denen im wesentlichen mehrere selbständige Projektoren mit Karusselmagazin übereinander oder nebeneinander in einem Gestell untergebracht und ihre Optik auf das gleiche Feld eines Bildschirmes eingestellt sind.

Mit diesen Projektionsgeräten ist es zwar möglich, Multivisionen und schnelle Bildfolgen zu zeigen, jedoch ist das Ausrichten der einzelnen Projektoren des Projektionsgerätes sehr zeitraubend. Durch die relativ weiten Abstände der einzelnan Objektive des Projektionsgerätes sind die projizierten Diapositive zueinander, insbesondere in den Randbereichen, ungenau, weil die Projektoren unterschiedlich schräg zum Bildschirm stehen. Da ferner die bekannten Projektionsgeräte für jeden Projektor ein selbständiges Diamagazin benötigen, dessen Dias automatisch dem Projektor zugeführt und weggenommen werden können, sind die bekannten Projektionsgeräte mechanisch sehr aufwendig und für Störungen aller Art anfällig.

Aufgabe der Erfindung ist es, ein Projektionsgerät zu schaffen, bei dem die beschriebenen Nachteile der bekannten Geräte vermieden sind und das in der Lage ist, bei geringem technischen Aufwand in schneller Bildfolge mehrere Diapositive gleichzeitig oder nacheinander auf das gleiche Feld eines Bildschirmes zu projizieren. Insbesondere besteht die Aufgabe, ein Projektionsgerät zu schaffen, das auch im Dauerbetrieb nicht störanfällig ist und bei dem auch in den Randbereichen die projizierten Bilder präzise sind und keine Verzerrungen aufweisen.

Diese Aufgabe wird erfindungsgemäß durch die Merkmale der Patentansprüche 1 und 21 gelöst.

Bei dem erfindungsgemäßen Projektionsgerät besteht der Vorteil, daß die Einrichtzeit für mehrere Projektoren entfällt. Die elektronische Ansteuerung der einzelnen Projektionslampen kann vereinfacht werden, da gleichzeitig vier bis acht Diapositive zur Verfügung stehen, die einzeln oder überblendend durch jeweiliges Ansteuern der verschiedenen Projektionslampen projiziert werden können. Die erfindungsgemäße Anordnung von mehreren Diapositiven auf einem Diaträger hat den Vorteil, daß die einzelnen Dias genau auf dem Diaträger ausgerichtet werden können und ebenso präzise zwischen den Kondensoren und den Objektiven eingeschwenkt werden können.

Das erfindungsgemäße Projektionsgerät kann mit einem durchscheinenden Bildschirm versehen werden, der im festen, relativ kleinen Abstand von den Objektiven angeordnet ist. In dieser Ausführung ist das Gerät insbesondere zur Benutzung in Schaufenstern, Verkaufsräumen und dergleichen geeignet, um Werbeshows zu zeigen.

Das erfindungsgemäße Gerät kann aber auch die Bilder auf eine Reflexionswand projizieren, die im veränderlichen Abstand vor dem Projektionsgerät aufgestellt wird.

Weitere Verbesserungen und Ausführungen der Erfindung ergeben sich aus den Unteransprüchen.

In der folgenden Beschreibung werden Ausführungsbeispiele der Erfindung unter Bezugnahme auf die Zeichnungen näher erläutert. Die Zeichnungen zeigen in

Fig. 1 eine Vorderansicht eines Projektionsgerätes mit sechs Objektiven und einem runden Diaträger mit sechsunddreißig Diapositiven,

Fig. 2 eine Seitenansicht des Projektionsgerätes nach Fig. 1,

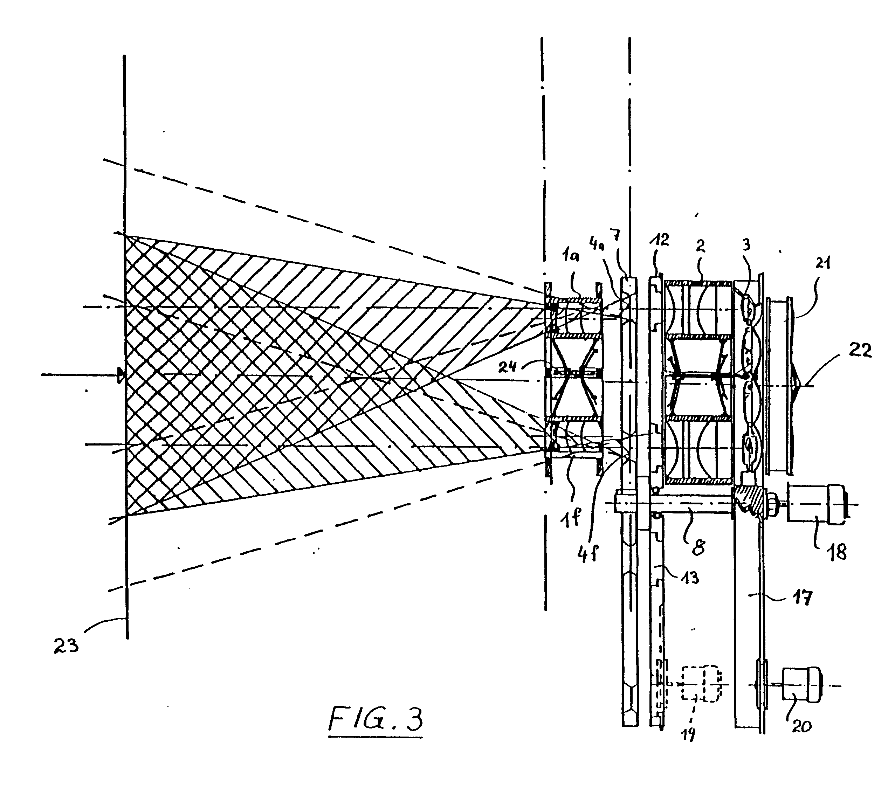

Fig. 3 eine Schnittansicht des Projektionsgerätes,

Fig. 4 eine Schnittansicht des Lampenhalters,

Fig. 5 eine Seitenansicht des Projektionsgerätes entsprechend Fig. 2 mit einem aufgesetzten Scheibenmagazin,

Fig. 6 eine Vorderansicht auf das Scheibenmagazin und auf eine Effektscheibe,

Fig. 7 eine Vorderansicht eines Objektivträgers mit sieben Objektiven.

Fig. 8 eine Vorderansicht eines geteilten Diaträgers

Fig. 9 eine Ansicht nach der Schnittlinie IX-IX in Fig. 8,

Fig. 10 eine Vorderansicht eines geteilten Diaträgers aus durchsichtigem Werkstoff,

Fig. 11 eine Ansicht nach der Schnittlinie XI-XI in Fig. 10.

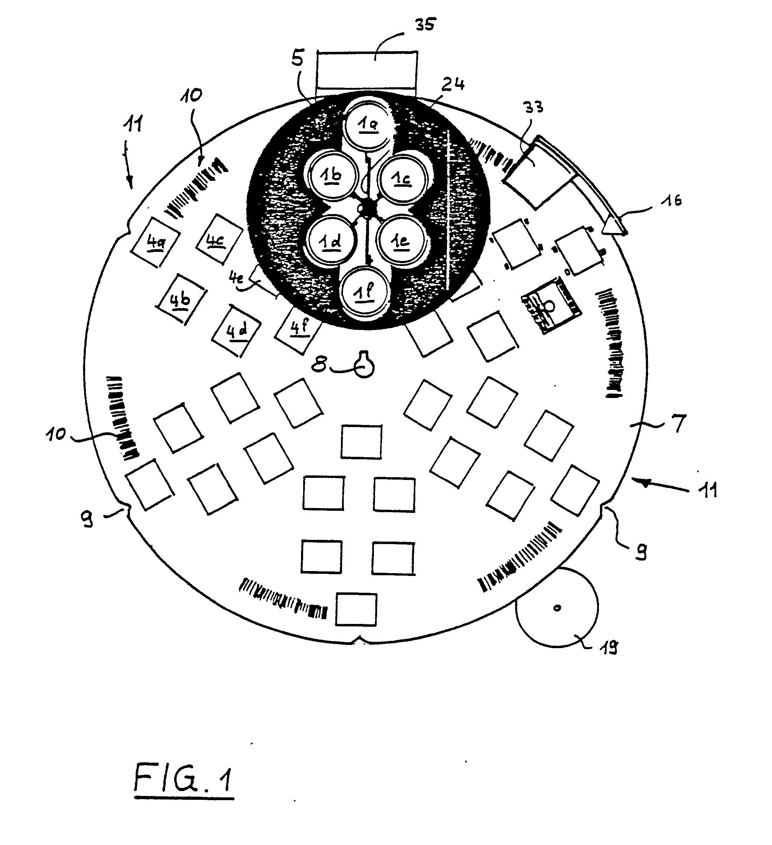

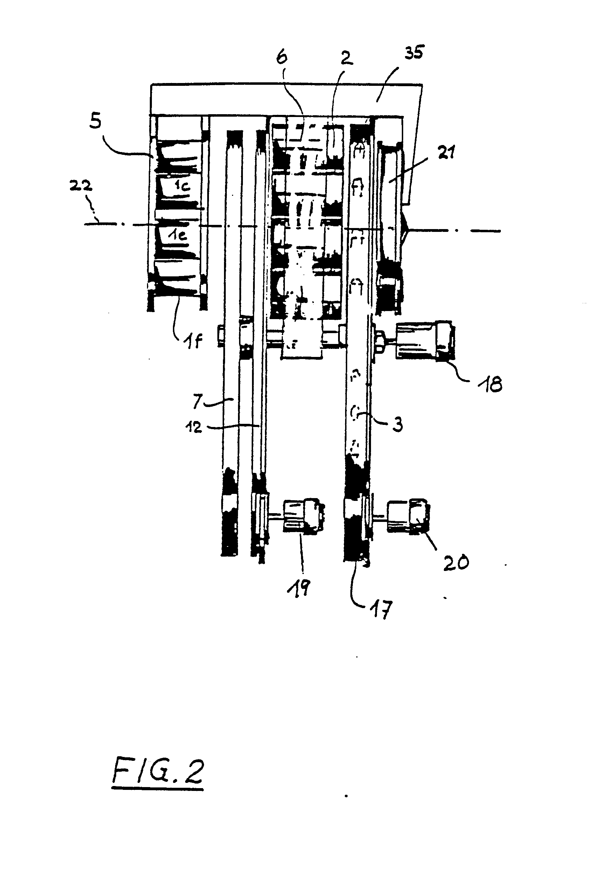

Das aus den Fig. 1 und 2 ersichtliche Projektionsgerät weist mehrere Objektive 1a, 1b, 1c, 1d, 1e, 1f auf, die im geringen Abstand voneinander von einem Objektivträger 5 gehalten sind. Wie Fig. 2 zeigt, sind den Objektiven 1 Kondensoren 2 zugeordnet, die in gleicher Anordnung wie die Objektive 1a, 1b, 1c, 1d, 1e, 1f in einem Kondensorträger 6 befestigt sind. Die den Objektiven 1a, 1b, 1c, 1d, 1e, 1f zugeordneten Diapositive 4a, 4b, 4c, 4d, 4e, 4f sind auf einem ebenen Diaträger 7 angeordnet, der als runde Scheibe ausgebildet ist und um eine zentrale Achse 8 drehbar im Projektionsgerät gehalten ist.

Wie Fig. 1 zeigt, sind auf sechs Sektoren der Scheibe 7 je eine Gruppe 11 von sechs Diapositiven 4a, 4b, 4c, 4d, 4e, 4f angeordnet. Diese sechs Gruppen 11 von Diapositiven 4 können durch Drehen der Scheibe 7 vor die Objektive 1a, 1b, 1c, 1d, 1e, 1f gebracht werden. Die Diapositive sind mittels Paßstiften präzise ausgerichtet auf dem Diaträger 7 befestigt. Zur exakten Einstellung des scheibenförmigen Diaträgers relativ zum Objektivträger 5 sind am Umfang der Scheibe 7 Rasten 9 vorgesehen, die mit einer Rastvorrichtung 16 am Projektionsgerät zusammenwirken. Beim Einrasten des Rastvorsprungs in eine Rastausnehmung 9 steht eine Gruppe 11 von Diapositiven 4 genau ausgerichtet zwischen den Objektiven 1 und den dazugehörigen Kondensoren 2. Auf dem Diaträger 7 sind Informationsstreifen 10 angeordnet, deren Informationen von einem Lesegerät 33 ablesbar sind. Jeder Gruppe 11 von Diapositiven 4 ist ein Informationsstreifen 10 zugeordnet. Beim Einschwenken einer Gruppe 11 von Diapositiven 4 liest das Lesegerät 33 die Signale zur Steuerung der Lichtfolge. Ein Steuergerät des Projektionsgerätes steuert dann entsprechend den Informationen des Informationsstreifens 10 den Einsatz und die Helligkeit der Projektionslampen 3. Die Informationsstreifen 10 können auch Informationen zur Steuerung eines Tongerätes oder dergleichen enthalten.

Sofern das Projektionsgerät mit einem im festen Abstand befindlichen durchscheinenden Bildschirm ausgerüstet ist, können die Objektive 1a, 1b, 1c, 1d, 1e, 1f optimal ausgerichtet fest im Objektivträger 5 befestigt sein. Sofern das Projektionsgerät auf einen reflektierenden Bildschirm projizieren soll, dessen Abstand zum Projektionsgerät veränderlich ist, müssen die Objektive 1a, 1b, 1c, 1d, 1e, 1f zum Fokussieren axial einstellbar im Objektivträger 5 gehalten sein. Damit aber auch alle sechs Bilder der verschiedenen Objektive in völlige Übereinstimmung gebracht werden können, müssen die Objektive auch rechtwinklig zu ihrer optischen Achse einstellbar sein. Da sowohl die axiale Einstellung als auch der Querversatz der Objektive abhängig ist von der Entfernung des Bildschirmes von den Objektiven, können diese im Objektivträger entlang eines Kegelmantels verstellbar sein, so daß beispielsweise mittels einer Gewindespindel sämtliche Objektive fokussiert und optimal quer versetzt werden können.

Die Objektive 1a, 1b, 1c, 1d, 1e, 1f können aber auch in genau gearbeiteten Schlitzführungen des Objektivträgers 5 axial verschiebbar geführt und mittels einer als sogenannte Spinne ausgebildeten Einstellvorrichtung 24 quer verschieblich geführt sein. Mittels dieser Spinne 24 können die Objektive zusammengezogen oder auseinandergedrückt werden.

Wie Fig. 2 zeigt, ist hinter dem als Scheibe ausgebildeten Diaträger 7 eine Effektscheibe 12 angeordnet, die in Größe und Ausbildung dem scheibenförmigen Diaträger 7 entspricht. In dieser Effektscheibe 12 sind Aussparungen 13 angeordnet zur Aufnahme verschiedener Standardeffekte. In diese Aussparungen können Softmasken, Farbfilter oder sonstige Muster eingesetzt werden. Diese Aussparungen 13 sind in gleicher Anordnung und in gleichen Gruppen angeordnet wie die Diapositive 4a, 4b, 4c, 4d, 4e, 4f auf dem Diaträger 7.

Um eine optimale Ausleuchtung der einzelnen Diapositive zu gewährleisten, sind hinter der Effektscheibe 12 Kondensoren 2 angeordnet, die von einem Kondensorträger 6 gehalten sind. Auch die Kondensoren können axial und quer dazu einstellbar gehalten sein.

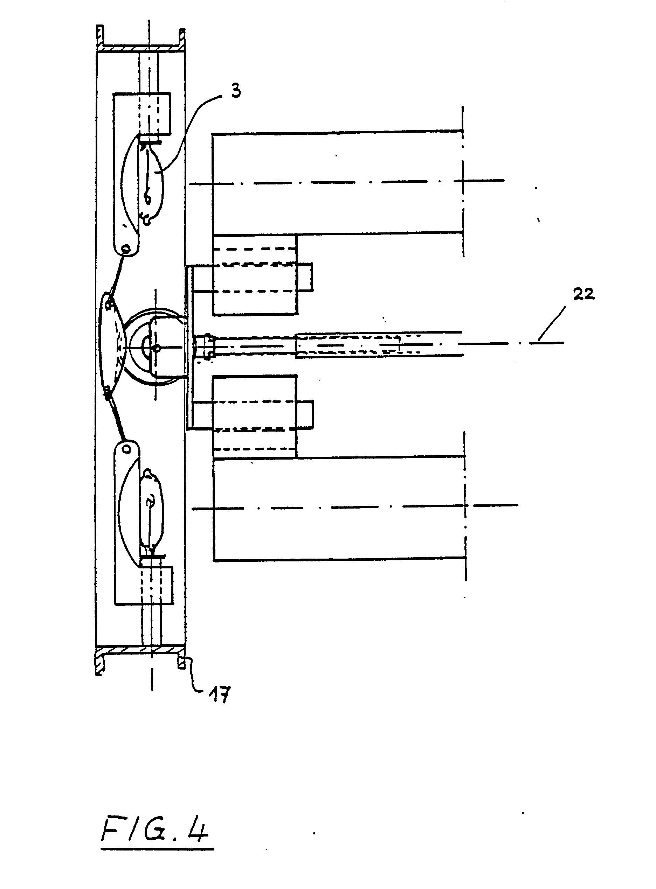

Hinter den Kondensoren 2 sind die Projektionslampen 3 angeordnet, die in der Anordnung der Objektive 1a bis 1f in einem Lampenträger 17 untergebracht sind. In Fig. 2 ist der Lampenträger 17 als Scheibe ausgebildet, dessen Durchmesser dem Durchmesser des scheibenförmigen Diaträgers 7 und der Effektscheibe 12 entspricht. Auf diese Weise können im Lampenträger 17 mehrere Gruppen von Projektionslampen angebracht werden, so daß bei Ausfall einer Projektionslampe der scheibenförmige Lampenhalter 17 um die Achse 8 gedreht und eine neue Gruppe von Projektionslampen in Betriebsstellung gebracht wird. Das Umschalten des Lampenhalters 17 kann auch durch Messung der Widerstandswerte eingeleitet werden, so daß bereits eine neue Gruppe von Projektionslampen in die Betriebsstellung gelangt, bevor eine Lampe durchbrennt. Auf diese Weise kann das Projektionsgerät über eine lange Zeit im Dauerbetrieb einwandfrei arbeiten. Der als Lampenmagazin ausgebildete Lampenträger 17 ist ebenso wie die Effektscheibe 12 über Kugellager auf der Achse 8 gelagert. Bei einem Projektionsgerät mit quer verstellbaren Kondensoren 2 ist es vorteilhaft, auch die Projektionslampen 3 quer verstellbar im Lampenträger 17 anzuordnen, so daß jede Lampe 3 genau auf die Mittelachse des zugehörigen Kondensors 2 eingestellt werden kann (vgl. Fig. 4).

Wie Fig. 2 zeigt, ist hinter dem Lampenhalter 17 ein Kühlgebläse 21 angeordnet, welches für die Kühlung der in Betriebsstellung befindlichen Lampen 3 sorgt.

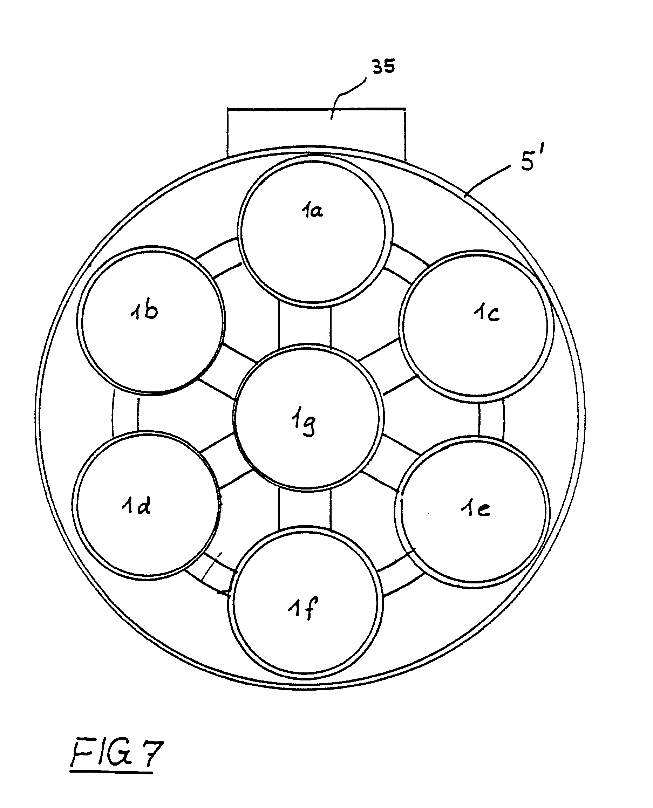

In Fig. 1 sind die Objektive 1a bis 1f, die dazugehörigen Diapositive 4a bis 4f mit ihren Mittelpunkten auf einer Ellipse angeordnet. Diese Anordnung hat den Vorteil, daß relativ viele Gruppen 11 von Diapositiven 4 auf Sektoren einer runden Scheibe 7 angeordnet werden können. Diese Anordnung hat aber den Nachteil, daß die Objektive 1a und 1f voneinander einen weiteren Abstand haben als die übrigen Objektive 1b, 1c, 1d und 1e. Um möglichst viele Objektive auf engstem Raum unterzubringen ist es vorteilhaft, die Objektive auf einer Kreislinie anzuordnen, so daß alle Objektive den gleichen Abstand von einer Trommelachse 22 haben (vgl. Fig. 7). Bei dieser Anordnung der Objektive 1 und der Kondensoren 2 ist die Ausbildung des Objektivträgers 5 und des Kondensorträgers 6 vereinfacht. Da bei einer einstellbaren Ausbildung der Objektive 1 und der Kondensoren 2 die Verstellwege aller Objektive und aller Kondensoren völlig gleich sind, ist auch die Ausbildung der Einstellvorrichtung vereinfacht.

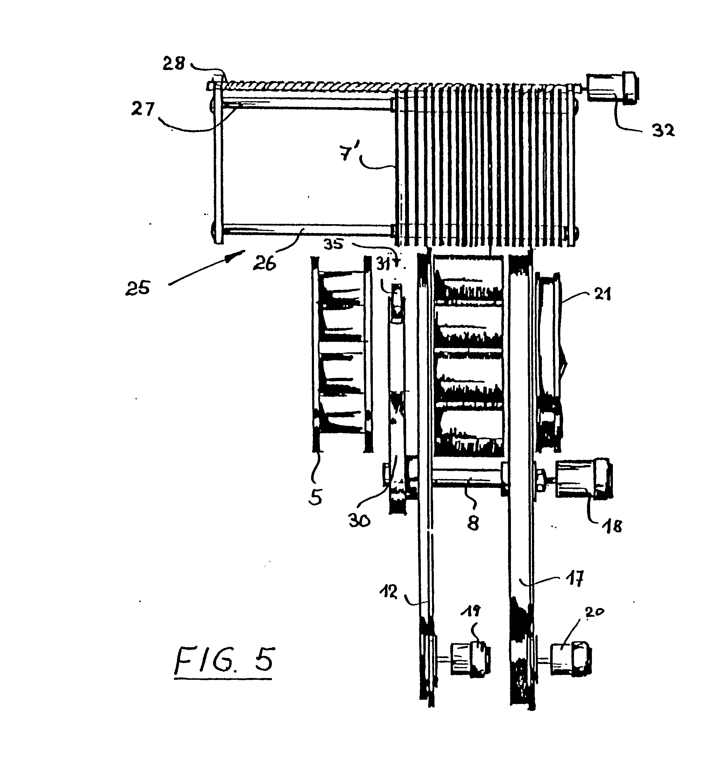

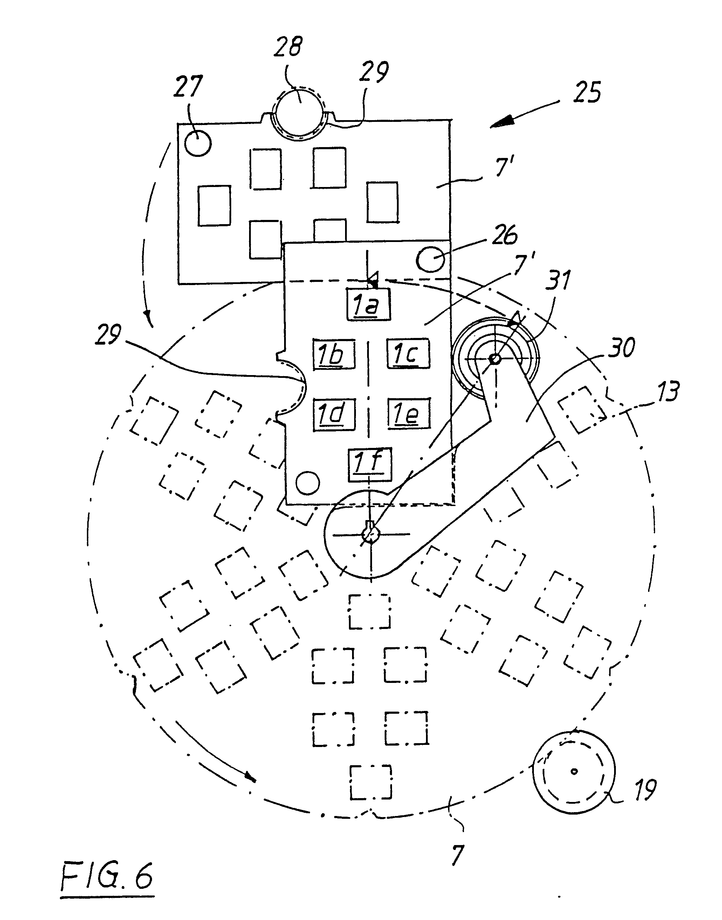

Falls man in einem Programm mit sechsunddreißig Dias nicht auskommt, kann anstelle eines runden scheibenförmigen Diaträgers 7 ein Diamagazin 25 an das Projektionsgerät angesetzt werden, das zahlreiche, zum Beispiel zwanzig, rechteckige Diaträger 7' aufweist mit jeweils sechs Diapositiven 4a, 4b, 4c, 4d, 4e, 4f. Diese Diaträger 7' können, wie die Fig. 6 zeigt, in den Schacht 35 zwischen den Objektiven 1 und der Effektscheibe 12 einfallen. Die Diaträger 7' sind um eine Führungsstange 26 schwenkbar gehalten, so daß ein Diaträger 7' in den Schacht 35 einfällt, wenn eine Kippsperre 27 den jeweiligen Diaträger 7' freigibt. Wie Fig. 5 zeigt, sind die Diaträger 7' axial verschieblich im Magazin 25 gehalten. Das axiale Verstellen der scheibenförmigen Diaträger 7' geschieht durch eine Gewindespindel 28, die von einem Elektromotor 32 antreibbar ist. Mit Hilfe dieser Gewindespindel 28, die in ein Gegengewinde 29 an jedem scheibenförmigen Diaträger 7' eingreift, werden die Platten über den Schacht 35 zwischen den Objektiven 1 und der Effektscheibe 12 bewegt. Befindet sich eine Diaträgerscheibe 7' genau über dem Schacht 35, dann gibt eine stangenförmige Kippsperre 27, die an dieser Stelle unterbrochen ist, die jeweilige Diaträgerplatte 7' frei, so daß sie nach unten in die richtige Stellung kippt. Mit Hilfe eines auf der Achse 8 angeordneten Wechselhebels 30 mit Rolle 31 kann die eingeschwenkte Diaträgerscheibe 7' wieder in das Magazin 25 zurückgeschwenkt werden und durch Weiterschieben mittels der Gewindespindel 28 auf die Kippsperre 27 aufgeschoben werden.

Die Fig. 7 zeigt in Frontansicht einen Objektivträger 5' mit sieben Objektiven 1a - 1g. Die Achsen dieser Objektive 1a - 1f sind auf einem Kreis um die Trommelachse angeordnet, während in der Trommelachse ein siebtes Objektiv 1g angeordnet ist. In entsprechender Weise können die Kondensoren 2 im Kondensorträger 6 und die Projektionslampen 3 im Lampenträger 17 angeordnet sein. Ebenso sind auch die Diapositive einer Gruppe auf der Diaträgerscheibe 7 bzw. 7' anzuordnen.

Die einzelnen Teile des Projektionsgerätes, nämlich der Objektivträger 5, der Kondensorträger 6, der Lampenträger 17 und das Kühlgebläse 21 werden von einer Brücke 35 zu einem Gerät vereinigt. Diese Brücke 35 kann derart angeordnet und ausgebildet sein, daß das Diaträger-Magazin 25 neben dieser Brücke 35 oder auf dieser Brücke 35 Platz findet.

Die sechs oder sieben Diapositive 4a-4f können durch entsprechende Ansteuerung der einzelnen Projektionslampen 3 nacheinander projiziert, eingeblendet oder überblendet werden, ohne dass ein mechanischer Diawechsel vorgenommen wird. Dadurch werden neue Möglichkeiten bei der Gestaltung audiovisueller Programme eröffnet. Die vorzugsweise aus Kunststoff hergestellten Diaträgerscheiben 7 und 7' sind mit allen Steuerinformationen versehen, die für den störungsfreien Ablauf auch eines schwierigen Programmes erforderlich sind. Die Objektive 1a - 1f sowie die dazugehörenden Kondensoren 2 und die Projektionslampen 3 sind derart versetzt zu den Diapositiven 4a - 4f angeordnet, dass auch bei einem im geringen Abstand von den Objektiven befindlichem Bildschirm oder bei einem sehr grossen projizierten Bild die perspektivischen Verzerrungen aufgehoben sind und die Diapositive völlig deckungsgleich projiziert werden. Bei einer Veränderung des Projektionsabstandes können alle Objektive über eine gemeinsame Einstellvorrichtung optimal eingestellt werden.

Ein Projektionsgerät nach der Erfindung mit einer Effektscheibe 12 und musikabhängiger Helligkeitsregelung ist insbesondere für das Vorführen von Bildprogrammen in Diskotheken geeignet.

Wenn eine Bildfolge einer Diagruppe 11 abgespielt ist, muß der Diaträger 1 von seinem Antrieb 18 um 60° um die Achse 8 gedreht werden, damit eine neue Diagruppe 11 im Strahlengang der sechs Projektoren eingeschwenkt ist. Beim Verdrehen der Diaträgerscheibe 7 entsteht eine Dunkelphase, die, wie bei jedem Projektor dann auftritt, wenn ein Diapositiv gewechselt wird. Zur Vermeidung dieser Dunkelphase wird erfindungsgemäß vorgeschlagen, daß die runde Diaträgerscheibe 7 sich zusammensetzt aus einer Innenscheibe 7a, welche die in Nähe der Achse 8 befindlichen Dias einer jeden Gruppe trägt, und einer äußeren Ringscheibe 7b, welche die im größeren Abstand von der Achse befindlichen Dias einer jeden Gruppe trägt, und die unabhängig von der Innenscheibe um die Achse drehbar ist. Mit Hilfe einer derartigen Diaträgerscheibe kann die Dunkelphase dadurch vermieden werden, daß beim Verdrehen eines Teiles der Diaträgerscheibe die Diapositive des jeweils anderen Teiles der Diaträgerscheibe projiziert werden.

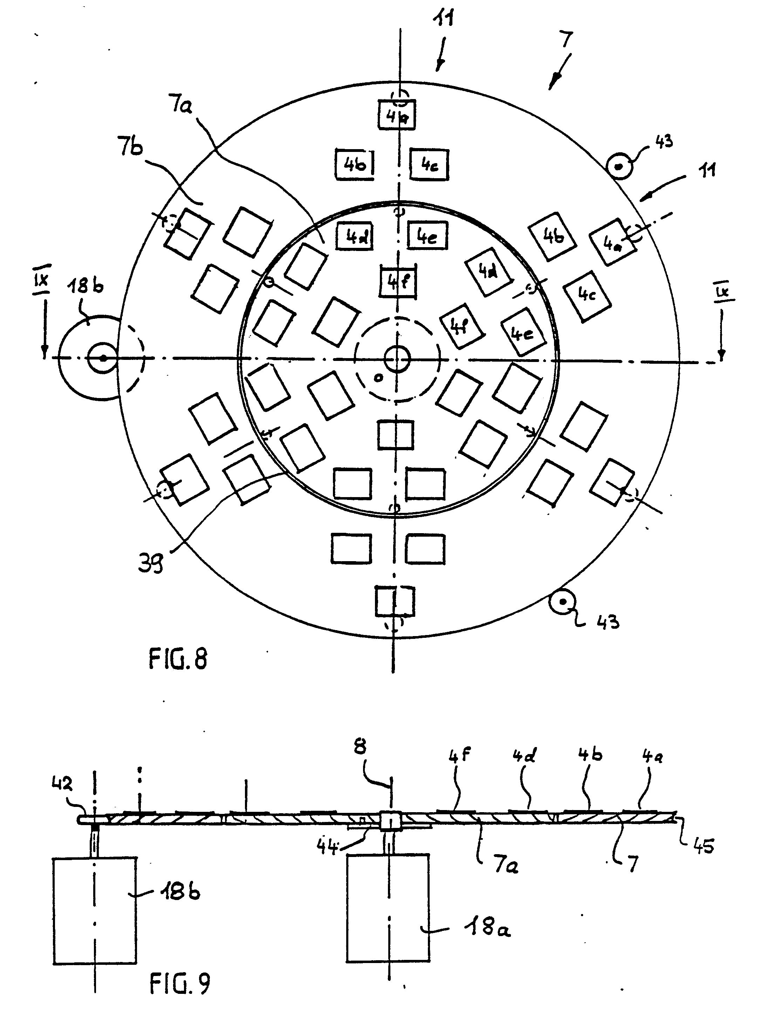

In Fig. 8 und 9 ist eine Diaträgerscheibe 7 dargestellt, die entlang des Teilungskreises 39 in zwei Teile geteilt sind, nämlich in eine Innenscheibe 7a und eine äußere Ringscheibe 7b.

Wie Fig. 9 zeigt, sind beide Teile der Diaträgerscheibe mit einem eigenen Antrieb 18a und 18b versehen, so daß sie unabhängig voneinander um die Achse 8 gedreht werden können. Während die Innenscheibe 7a über eine zentral angeordnete Mitnehmerscheibe 44 bewegt wird, ist die Ringscheibe 7b durch eine Reibrolle 42 an der Peripherie angetrieben und durch Führungsrollen 43, die ebenfalls an der Peripherie der Ringscheibe 7b angreifen, geführt.

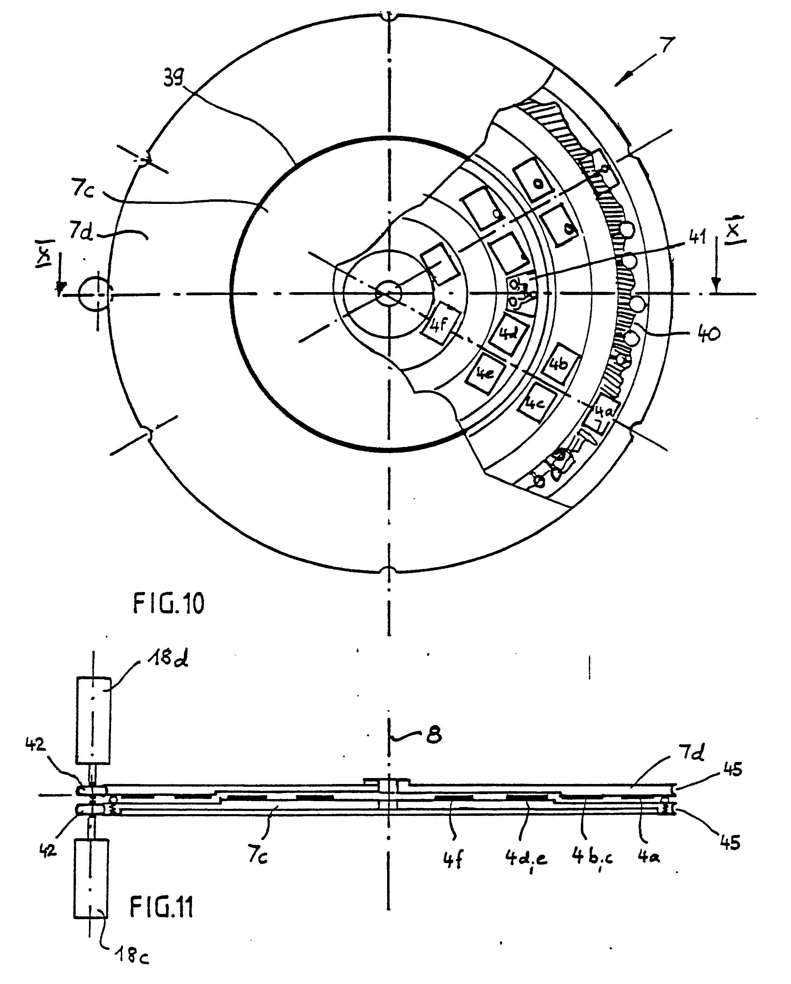

Bei der Ausführungsform nach den Fig. 10 und 11 besteht die Trägerscheibe 7 aus zwei gleichgroßen, unabhängig voneinander drehbaren Scheiben 7c und 7d, die aus einem glasklaren Werkstoff bestehen. Die eine Scheibe 7c trägt die in Nähe der Achse 8 angeordneten Dias 4d, 4e, 4f einer jeden Gruppe 11 und die andere Scheibe 7d trägt die anderen Dias 4a, 4b, 4c einer jeden Gruppe 11. Diese beiden Scheiben 7c und 7d sind von je einer Reibrolle 42 angetrieben, die in Umfangskehlen 45 der Scheiben 7c und 7d eingreifen. Weil die Scheiben 7c und 7d aus glasklarem, durchsichtigen Werkstoff bestehen, behindert die Scheibe, die in eine neue Stellung gedreht wird, nicht das Projizieren der Diapositive der jeweils anderen Scheibe. Bei dieser Ausführungsform können die Antriebe an der Peripherie beider Scheiben angreifen oder aber auch im Zentrum beider Scheiben.

Eine weitere Möglichkeit, die Dunkelphasen beim Verdrehen der Diaträgerscheibe 7 von einer Stellung in die andere Stellung zu vermeiden, besteht darin, daß insbesondere zwischen den radial äußeren Dias 4a benachbarter Gruppen 11 von Diapositiven ein um die Achse 8 gebogener Diapositivstreifen 40 angeordnet ist. Beim Umschalten der Diaträgerscheibe 7 kommt dieser Diapositivstreifen 40 in den Strahlengang der sonst nur für das Diapositiv 4a einer jeden Gruppe 11 bestimmt ist, so daß beim Ansteuern der zugehörigen Projektionslampe 3 auf dem Bildschirm ein wanderndes Bild erscheint, zum Beispiel eine Landschaft. Ist die Diaträgerscheibe 7 in zwei konzentrische Teile geteilt, dann kann der Diastreifen 40 überblendet werden von einem projizierten Diapositiv, das sich auf der Innenscheibe 7c befindet. Es kann auch auf der Innenscheibe 7c zwischen den Diagruppen 11 ein Zwischendiapositiv 41 angebracht werden, das während des Umschaltvorganges auf den Bildschirm projiziert wird. Da sowohl der Antrieb der mit den radial inneren Diapositiven versehenen Scheibe 7a bzw. 7c als auch die mit den radial äußeren Diapositiven versehenen Ringscheibe 7b bzw. durchsichtige Scheibe 7d ebenso wie der Antrieb für die Effektscheibe sowie das Aufleuchten der jedem Objektiv zugeordneten Projektionslampe 3 elektronisch gesteuert werden, sind vielfache Variationen der Bildfolgen, der Überblendungen und dergleichen möglich.

Bezugszeichenliste
1a Objektiv
1b Objektiv
1c Objektiv
1d Objektiv
1e Objektiv
1e Objektiv
1f Objektiv
1g Objektiv
2 Kondensor
3 Projektionslampe

4a Diapositiv (Dia)
4b "
4c "
4d "
4e "
4f "

5 Objektivträger
6 Kondensorträger
7 Diaträgerscheibe
8 Achse
9 Raste

10 Informationsstreifen
11 Diagruppe
12 Effektscheibe
13 Aussparungen
14 Gruppe von Aussparungen 13
15 Raste
16 Rastvorrichtung
17 Lampenträger
18 Antrieb für Diamagazin-Scheibe 7
19 Antrieb für Effektscheibe 12

20 Antrieb für Lampenträger 17
21 Kühlgebläse
22 Trommelachse
23 Bildschirm
24 Einstellvorrichtung
25 Diaträgerscheiben-Magazin
26 Führungsstange
27 Kippsperre
28 Gewindespindel
29 Gegengewinde
30 Wechselhebel
31 Rolle
32 Antrieb für Gewindespindel 28
33 Lesegerät
34 Brücke
35 Schacht

7a Innenscheibe
7b Ringscheibe
7c Scheibe
7d Scheibe
18a Antrieb für Innenscheibe
18b Antrieb für Ringscheibe

18c Antrieb für Scheibe 7c
18d Antrieb für Scheibe 7d

39 Teilungskreis
40 Diapositivstreifen
41 Zwischendiapositiv

42 Reibrolle
43 Führungsrolle
44 Mitnehmerscheibe
45 Hohlkehle

**Patentansprüche**

1. Projektionsgerät für Diapositive (Dias) mit mehreren Objektiven, denen je ein Kondensor und eine Projektionslampe sowie ein zwischen Kondensor und Objektiv einschiebbares Dia zugeordnet sind, wobei die Projektionslampen unabhängig voneinander steuerbar sind, mehrere Objektive (1a, 1b, 1c, 1d, 1e, 1f) im geringen Abstand voneinander auf einem Objektivträger (5) angeordnet sind, die den Objektiven (1a, 1b, 1c, 1d, 1e, 1f) zugeordneten Kondensoren (2) in gleicher Anordnung in einem Kondensorträger (6) befestigt sind und die den Objektiven (1a, 1b, 1c, 1d, 1e, 1f) zugeordneten Dias (4a, 4b, 4c, 4d, 4e, 4f) in gleicher Anordnung auf einem ebenen Diaträger (7) befestigt sind,
dadurch gekennzeichnet,
daß der Diaträger eine runde Scheibe (7) ist, mit mehreren Sektoren, in denen je eine Gruppe (11) von den Objektiven (1a, 1b, 1c, 1d, 1e, 1f) zugeordneten Dias (4a, 4b, 4c, 4d, 4e, 4f) angeordnet sind und die Scheibe um eine zentrale Achse (8) drehbar in das Projektionsgerät einsetzbar ist.

2. Projektionsgerät nach Anspruch 1, dadurch gekennzeichnet, daß die Scheibe (7) an ihrem Umfang den Gruppen (11) von Dias (4) zugeordnete Rasten (9) aufweist, welche mit einer Rastvorrichtung (16) am Projektionsgerät zusammenwirken.

3. Projektionsgerät nach Anspruch 2, dadurch gekennzeichnet, daß jeder Gruppe (11) von Dias (4) ein Informationsstreifen (10) zugeordnet ist, in dem die Signale zur Steuerung der Lichtfolge für ein Steuergerät des Projektors ablesbar gespeichert sind.

4. Projektionsgerät nach einem der Ansprüche 1 bis 3, gekennzeichnet durch eine zwischen den Kondensoren (2) und den Objektiven (1) einschiebbare Effektscheibe (12), auf der in der Anordnung der Objektive (1) Aussparungen (13) zur Aufnahme verschiedener Standardeffekte vorgesehen sind.

5. Projektionsgerät nach Anspruch 4, dadurch gekennzeichnet, daß die Effektscheibe (12) rund ist und um ihren Mittelpunkt drehbar auf der Achse (8) des Projektionsgerätes gelagert ist und mehrere Gruppen (14) von Standardeffekten aufnehmende Aussparungen (13) sowie den Gruppen (14) zugeordnete Rasten (15) vorgesehen sind.

6. Projektionsgerät nach einem der Ansprüche 1 bis 5, dadurch gekennzeichnet, daß die Objektive (1a, 1b, 1c, 1d, 1e, 1f) und die diesen zugeordneten Kondensoren (2) und Projektionslampen (3) und Diapositive (4a, 4b, 4c, 4d, 4e, 4f) im gleichen Abstand um eine Trommelachse (22) angeordnet sind.

7. Projektionsgerät nach Anspruch 6, dadurch gekennzeichnet, daß im gleichen Abstand um die Trommelachse (22) vier oder sechs Objektive (1), Kondensoren (2), Projektionslampen (3) und Diapositive (4) und auf der Trommelachse (22) ein weiteres Objektiv (1) und diesem zugeordnet ein Kondensor (2), eine Projektionslampe (3) und ein Diapositiv (4) angeordnet sind.

8. Projektionsgerät nach einem der Ansprüche 1 bis 7, dadurch gekennzeichnet, daß die Objektive (1a, 1b, 1c, 1d, 1e, 1f) fest im Objektivträger (5) und die Kondensoren (2) fest im Kondensorträger (6) angeordnet sind und im festen Abstand vom Objektivträger (5) ein durchscheinender Bildschirm (23) angeordnet ist.

9. Projektionsgerät nach einem der Asprüche 1 bis 8, dadurch gekennzeichnet, daß die Objektive (1a, 1b, 1c, 1d, 1e, 1f) längs ihrer optischen Achsen und rechtwinklig dazu einstellbar sind.

10. Projektionsgerät nach Anspruch 9, dadurch gekennzeichnet, daß die Objektive (1a, 1b, 1c, 1d, 1e, 1f) mittels einer gemeinsamen Einstellvorrichtung (24) einstellbar sind.

11. Projektionsgerät nach einem der Ansprüche 1 bis 10, dadurch gekennzeichnet, daß die Projektionslampen (3) in einem gemeinsamen, leicht auswechselbaren Lampenhalter (17) angeordnet sind.

12. Projektionsgerät nach Anspruch 11, dadurch gekennzeichnet, daß der Lampenhalter (17) scheibenartig ausgebildet und um die, Achse (8) drehbar im Gerät befestigt ist und mehrere, auf Sektoren des Lampenhalters (17) verteilte Gruppen von den Objektiven (1a, 1b, 1c, 1d, 1e, 1f) und Kondensoren (2) zugeordneten Projektionslampen (3) aufweist.

13. Projektionsgerät nach Anspruch 11 oder 12, dadurch gekennzeichnet, daß der in Betriebsstellung befindlichen Gruppe von Projektionslampen (3) ein Kühlgebläse (21) zugeordnet ist.

14. Projektionsgerät nach einem der Ansprüche 1 bis 13, dadurch gekennzeichnet, daß die Diaträgerscheibe (7) mittels eines Elektromotors (18) drehbar ist.

15. Projektionsgerät nach Anspruch 14, dadurch gekennzeichnet, daß der Elektromotor (18) mit der Achse (8) gekuppelt ist und die Effektscheibe (12) mittels eines am Umfang der Scheibe angreifenden Reibradantriebes (19) verstellbar ist.

16. Projektionsgerät nach einem der Ansprüche 1 bis 15, dadurch gekennzeichnet, daß die Projektionslampen (3), der Antrieb (18) der Achse (8) zum Einwechseln der Dia-Gruppen (11) und der Antrieb (19) für die Effektscheibe (12) von einer Steuereinrichtung steuerbar sind.

17. Projektionsgerät nach Anspruch 1, dadurch gekennzeichnet, daß die runde Diaträgerscheibe (7) sich zusammensetzt aus einer Innenscheibe (7a), welche die in Nähe der Achse (8) befindlichen Dias (4d, 4e, 4f) einer jeden Gruppe (11) trägt und einer äußeren Ringscheibe (7b), welche die im größeren Abstand von der Achse (8) befindlichen Dias (4a, 4b, 4c) einer jeden Gruppe (11) trägt und die unabhängig von der Innenscheibe (7a) um die Achse (8) drehbar ist.

18. Projektionsgerät nach Anspruch 1, dadurch gekennzeichnet, daß die runde Diaträgerscheibe (7) sich zusammensetzt aus zwei etwa gleich großen, unabhängig voneinander drehbaren Scheiben (7c, 7d), von denen mindestens eine aus glasklarem Werkstoff besteht, und die eine Scheibe (7c) die in Nähe der Achse (8) angeordneten Dias (4d, 4e, 4f) einer jeden Gruppe (11) trägt und die andere Scheibe (7d) die anderen Dias (4a, 4b, 4c) einer jeden Gruppe trägt.

19. Projektionsgerät nach Anspruch 1, 17 oder 18, dadurch gekennzeichnet, daß insbesondere zwischen den radial äußeren Dias (4a) benachbarter Gruppen (11) ein um die Achse (8) gebogener Diapositivstreifen (40) angeordnet ist.

20. Projektionsgerät nach einem der Ansprüche 17 bis 19, dadurch gekennzeichnet, daß zwischen den Dias (4d, 4e, 4f) benachbarter Gruppen (11) auf der Innenscheibe (7a oder 7c) ein Zwischen-Diapositiv (41) angeordnet ist.

21. Projektionsgerät für Diapositive (Dias) mit mehreren Objektiven, denen je ein Kondensor und eine Projektionslampe sowie ein zwischen Kondensor und Objektiv einschiebbares Dia zugeordnet sind, wobei die Projektionslampen unabhängig voneinander steuerbar sind, dadurch gekennzeichnet, daß der Diaträger eine Scheibe (7') ist und zahlreiche Diaträgerscheiben (7') in einem Magazin (25) entlang einer Führungsstange (26) verschiebbar und um die Führungsstange (26) schwenkbar in einen Schacht (35) hinter den Objektiven (1a - 1f) mittels eines um eine Achse (8) schwenkbaren Wechselhebels (30) einschwenkbar geführt sind.

22. Projektionsgerät nach Anspruch 21, dadurch gekennzeichnet, daß die Diaträgerscheiben (7') von einer von einem Elektromotor (32) antreibbaren Gewindespindel (28), die an ein oben offenes Gegengewinde (29) der Diaträgerscheiben (7') anliegt, längs der Führungsstange (26) verschiebbar sind.

23. Projektionsgerät nach Anspruch 21 oder 22, dadurch gekennzeichnet, daß eine die Diaträgerscheiben (7') durchsetzende stangenartige Kippsperre (27) vorgesehen ist, welche über dem Schacht (35) zur Freigabe einer Diaträgerscheibe (7') unterbrochen ist.

## Claims

1. Projection apparatus for transparencies (slides) comprising a plurality of objectives with each of which a condenser and a projection lamp as well as a slide insertable between condenser and objective are associated, the projection lamps being controllable independently of each other, a plurality of objectives (1a, 1b, 1c, 1d, 1e, 1f) are arranged at a small spacing apart on an objective support (5), the condensers (2) associated with the objectives (1a, 1b, 1c, 1d, 1e, 1f) are secured in the same array in a condenser support (6) and the slides (4a, 4b, 4c, 4d, 4e, 4f) associated with the objectives (1a, 1b, 1c, 1d, 1e, 1f) are secured in the same array on a flat slide support (7), characterized in that the slide support is a round disc (7) comprising a plurality of sectors in each of which a group (11) of slides (4a, 4b, 4c, 4d, 4e, 4f) associated with the objectives (1a, 1b, 1c, 1d, 1e, 1f) are arranged and the disc is insertable into the projection apparatus to be rotatable about a central axis (8).

2. Projection apparatus according to claim 1, characterized in that the disc (7) comprises at its periphery detents (9) which are associated with the groups (11) of slides (4) and which cooperate with a detent means (16) on the projection apparatus.

3. Projection apparatus according to claim 2, characterized in that with each group (11) of slides (4) an information strip (10) is associated in which the signals for controlling the light sequence for a control device of the projector are stored in readable manner.

4. Projection apparatus according to any one of claims 1 to 3, characterized by an effects disc (12) which is insertable between the condensers (2) and the objectives (1) and on which in the array of the objectives (1) recesses (13) are provided for accommodating various standard effects.

5. Projection apparatus according to claim 4, characterized in that the effects disc (12) is circular and is mounted rotatably about its centre point on the shaft (8) of the projection apparatus and a plurality of groups (14) of recesses (13) accommodating standard effects and detents (15) associated with the groups (14) are provided.

6. Projection apparatus according to any one of claims 1 to 5, characterized in that the objectives (1a, 1b, 1c, 1d, 1e, 1f) and the condensers (2) associated therewith and projection lamps (3) and slides (4a, 4b, 4c, 4d, 4d, 4f) are arranged at equal intervals about a drum axis (22).

7. Projection apparatus according to claim 6, characterized in that at equal intervals about the drum axis (22) four or six objectives (1), condensers (2), projection lamps (3) and slides (4) are arranged and on the drum axis (22) a further objective (1) and a capacitor (2), a projection lamp (3) and a slide (4) associated therewith are arranged.

8. Projection apparatus according to any one of claims 1 to 7, characterized in that the objectives (1a, 1b, 1c, 1d, 1e, 1f) are arranged fixedly in the objective support (5) and the condensers (2) fixedly in the condenser support (6) and at a fixed distance from the objective support (5) a translucent screen (23) is arranged.

9. Projection apparatus according to any one of claims 1 to 8, characterized in that the objectives (1a, 1b, 1c, 1d, 1e, 1f) are adjustable along their optical axes and perpendicularly thereto.

10. Projection apparatus according to claim 9, characterized in that the oblectives (1a, 1b, 1c, 1d, 1e, 1f) are adjustable by means of a common adjusting means (24).

11. Projection apparatus according to any one of claims 1 to 10, characterized in that the projection lamps (3) are arranged in a common easily interchangeable lamp holder (17).

12. Projection apparatus according to claim 11, characterized in that the lamp holder (17) is made disc-like and is mounted in the apparatus rotatably about the shaft (8) and comprises a plurality of groups of projection lamps (3) associated with the objectives (1a, 1b, 1c, 1d, 1e, 1f) and condensers (2).

13. Projection apparatus according to claim 11 or 12, characterized in that the group of projection lamps (3) disposed in the operating position has associated therewith a cooling fan (13).

14. Projection apparatus according to any one of claims 1 to 13, characterized in that the slide support disc (7) is rotatable by means of an electric motor (18).

15. Projection apparatus according to claim 14, characterized in that the electric motor (18) is coupled to the shaft (8) and the effects disc (12) is adjustable by means of a friction wheel drive (19) engaging the periphery of the disc.

16. Projection apparatus according to any one of claims 1 to 15, characterized in that the projection lamps (3), the drive (18) of the shaft (8) for changing the slide groups (11) and the drive (19) for the effects disc (12) are controllable by a control device.

17. Projection apparatus according to claim 1, characterized in that the circular slide support disc (7) is made up of an inner disc (7a) which carries slides (4d, 4e, 4f), disposed in the vicinity of the shaft (8), of each group (11) and an outer annular disc (7b) which carries the slides (4a, 4b, 4c), disposed at a greater distance from the shaft (8), of each group (11) and which is rotatable independently of the inner disc (7a) about the shaft (8).

18. Projection apparatus according to claim 1, characterized in that the circular slide support disc (7) is made up of two substantially equisize discs (7c, 7d) which are rotatable independently of each other and of which at least one consists of transparent material, and the one disc (7c) carries the slides (4d, 4e, 4f), disposed in the vicinity of the shaft (8), of each group (11) and the other disc (7d) carries the other slides (4a, 4b, 4c) of each group.

19. Projection apparatus according to claim 1, 17 or 18, characterized in that in particular between the radially outer slides (4a) of adjacent groups (11) a transparency strip (40) bent round the shaft (8) is disposed.

20. Projection apparatus according to any one of claims 17 to 19, characterized in that between the slides (4d, 4e, 4f) of adjacent groups (11) on the inner disc (7a or 7c) an intermediate slide (41) is disposed.

21. Projection apparatus for transparencies (slides) comprising a plurality of objectives with each of which a condenser and a projection lamp as well as a slide insertable between condenser and objective are associated, the projection lamps being controllable independently of each other, characterized in that the slide support is a disc (7') and numerous slide support discs (7') are guided displaceably along a guide rod (26) and pivotally about said guide rod (26) into a well (35) behind the objectives (1a - 1f) by means of a change lever (30) pivotal about a shaft (8).

22. Projection apparatus according to claim 21, characterized in that the slide support discs (7') are displaceable by a threaded spindle (28) along the guide rod (26), said spindle being drivable by an electric motor (32) and bearing on an upwardly open counter thread (29) of the slide support disc (7').

23. Projection apparatus according to claim 21 or 22, characterized in that a rod-like tilt blocking means (27) is provided which passes through the slide support discs (7') and which is interrupted over the well (35) for freeing a slide support disc (7').

**Revendications**

1. Appareil de projection pour diapositives (dias) à plusieurs objectifs, à chacun desquels correspondent un condenseur et une lampe de projection ainsi qu'une dia qu'on peut glisser entre le condenseur et l'objectif, appareil dans lequel les lampes de projection peuvent être commandees independamment les unes des autres, plusieurs objectifs (1a, 1b, 1c, 1d, 1e, 1f) sont disposés à faible distance les une des autres sur un porte-objectif (5), les condenseurs (2) correspondant aux objectifs (1a, 1b, 1c, 1d, 1e, 1f) sont fixés dans la même disposition dans un porte-condenseur (6) et les dias (4a, 4b, 4c, 4d, 4e, 4f) correspondant aux objectifs (1a, 1b, 1c, 1d, 1e, 1f) son fixés dans la même dosposition sur un porte-dias plat (7), caractérisé en ce que le porte-dias est un disque circulaire (7), à plusieurs secteurs, dans chacun desquels est disposé un groupe (11) de dias (4a, 4b, 4c, 4d, 4e, 4f) correspondant aux objectifs (1a, 1b, 1c, 1d, 1e, 1f) et que le disque peut être monté dans l'appareil de projection, rotatif autour de l'axe central (8).

2. Appareil de projection selon la revendication 1, caractérisé en ce que le disque (7) présente sur son pourtour des encoches (9) correspondant aux groupes (11) de dias (4) et qui coopèrent avec un dispositif à cliquet (16) sur l'appareil de projection.

3. Appareil de projection selon la revendication 2, caractérisé en ce que, à chaque groupe (11) de dias (4), correspond une bande d'informations (10) portant les signaux de commande de la séquence des projections déchiffrables par un appareil de commande.

4. Appareil de projection selon l'une des revendications 1 à 3, caractérisé par un disque à effet (12) qu'on peut glisser contre les condenseurs (2) et les objectifs (1), sur lequel dans la disposition des objectifs (1), sont ménagés des évidements (13) pour recevoir des effets standard divers.

5. Appareil de projection selon la revendication 4, caractérisé en ce que le disque à effet (12) est circulaire et rotatif autour de son centre sur l'axe (8) de l'appareil de projection et que sont prévus plusieurs groupes (14) d'évidements (13) recevant des effets standard ainsi que des encoches (15) correspondant aux groupes (14).

6. Appareil de projection selon l'une des revendications 1 à 5, caractérisé en ce que les objectifs (1a, 1b, 1c, 1d, 1e, 1f) et les condenseurs qui leur correspondent, les lampes de projection (3) et les diapositives (4a, 4b, 4c, 4d, 4e, 4f) sont disposés à égale distance autour d'un axe de tambour (22).

7. Appareil de projection selon la revendication 6, caractérisé en ce que, à égale distance autour de l'axe du tambour (22), sont disposés quatre ou six objectifs (1), autant de condenseurs (2), de lampes de projection (3) et de diapositives (4) et que sur l'axe du tambour (22), sont disposés un second objectif (1) et un condenseur (2) lui correspondant, une lampe de projection (3) et une diapositive (4).

8. Appareil de projection selon l'une des revendications 1 à 7, caractérisé en ce que les objectifs (1a, 1b, 1c, 1d, 1e, 1f) sont fixés dans le porte-objectifs (5) et les condenseurs (2) sont fixés dans le porte condenseur (6) et que, à une distance fixe du porte-objectifs (5), est disposé un écran transparent (23).

9. Appareil de projection selon l'une des revendications 1 à 8, caractérisé en ce que la position des objectifs (1a, 1b, 1c, 1d, 1e, 1f) est réglable le long de leur axe optique et perpendiculairement à cet axe.

10. Appareil de projection selon la revendication 9, caractérisé en ce que la position des objectifs (1a, 1b, 1c, 1d, 1e, 1f) est réglable à l'aide d'un dispositif de réglage commun (24).

11. Appareil de projection selon l'une des revendications 1 à 10, caractérisé en ce que les lampes de projection (3) sont disposées dans un porte-lampes (17) qu'on peut facilement remplacer.

12. Appareil de projection selon la revendication 11, caractérisé en ce que le porte-lampes (17) a une forme de disque fixé dans l'appareil rotatif autour de l'axe (8) et présente plusieurs groupes, répartis sur des secteurs du porte-lampes (17), d'objectifs (1a, 1b, 1c, 1d, 1e, 1f) et de lampes de projection (3) correspondant aux condenseurs (2).

13. Appareil de projection selon l'une des revendication 11 et 12 caractérisé en ce que, aux groupes de lampes de projection (3) se trouvant en position de fonctionnement, correspond un ventilateur (21).

14. Appareil de projection selon l'une des revendications 1 à 13, caractériseé en ce que le disque (17) porteur de diapositves est rotatif sous l'action d'un moteur électrique.

15. Appareil de projection selon la revendication 14, caractérisé en ce que le moteur électrique (18) est couplé avec l'axe (8) et que la position du disque à effet est réglable à l'aide d'une commande (19) à roues à friction, en prise sur le pourtour du disque.

16. Appareil de projection selon l'une des revendications 1 à 15, caractérisé en ce que les lampes de projection (3), l'entraînement (18) de l'axe (8) pour le changement des groupes (11) de diapos et la commande (19) du disque à effet (12) peuvent être commandés par un seul dispositif.

17. Appareil de projection selon la revendication 1, caractérisé en ce que le disque circulaire (7) porteur de diapositives se compose d'un disque intérieur (7a), qui porte les diapositives (4d, 4e, 4f) d'un groupe (11) se trouvant au voisinage de l'axe (8) et un disque annulaire extérieur (7b), qui porte les dias (4a, 4b, 4c) d'un groupe (11) se trouvant à une distance plus grande de l'axe (8) et qui est rotatif autour de l'axe (8) indépendamment du disque intérieur (7a).

18. Appareil de projection selon la revendication 1, caractérisé en ce que le disque circulaire porteur de dias (7) se compose de deux disques (7c, 7d) à peu près aussi grands, rotatifs indépendamment l'un de l'autre, dont au moins un se compose d'un matériau transparent et le premier disque (7c) porte des dias (4d, 4e, 4f) d'un groupe (11) situées au voisinage de l'axe (8) et le second disque (7d) les autres dias (4a, 4b, 4c) du même groupe.

19. Appareil de projection selon l'une des revendications 1, 17 et 18, caractérisé en ce que, en particulier entre les groupes (11) voisins des dias radialement extérieures (4a) est disposée une bande de diapositives (40) incurvée autour de l'axe (8).

20. Appareil de projection selon l'une des revendications 17 à 19, caractérisé en ce que, entre les groupes (11) de dias (4d, 4e, 4f) voisins, sur le disque intérieur (7a ou 7c), est disposée une diapositive intermédiaire (41).

21. Appareil de projection pour diapositives (dias) à plusieurs objectifs, à chacun desquels correspond un condenseur et une lampe de projection ainsi qu'une dia qu'on peut glisser entre condenseur et objectif, les lampes de projection pouvant être commandées indépendamment les unes des autres, caractérisé en ce que le porte-dias est un disque (7') et que de nombreux disques porte-dias (7') peuvent être déplacés dans un magasin (25) le long d'une barre de guidage (26), sont basculables autour de cette barre et repliables dans une boite (35), derrière les objectifs (1a - 1f), au moyen d'un levier de changement (30) basculant autour d'un axe (8).

22. Appareil de projection selon la revendication 21, caractérisé en ce que les disques (7') porteurs de dias peuvent être déplacés le long de la barre de guidage (26) par un axe fileté (28) entraînable par un moteur électrique (32), qui se situe dans une contrevis (29), ouverte en haut, des disques porte-dias (7').

23. Appareil de projection selon la revendication 21 ou 22, caractérisé en ce que est prévue une fermeture basculante (27) en forme de tige traversant le disque porteur de dias (7'), fermeture qui est interrompue au-dessus de la brouette (35) pour pouvoir libérer un disque (7') porteur de dias.

# FIG.1

FIG.2

*FIG. 3*

0 127 647

FIG.4

FIG. 5

FIG. 6

FIG 7

0 127 647

FIG.8

FIG.9

15

FIG.10

FIG.11